# EUROPEAN PATENT APPLICATION

(11) **EP 4 545 176 A1**
(43) Date of publication of application: **30.04.2025**
(21) Application number: 23827213.2
(22) Date of filing: 21.06.2023
(51) Int. Cl.: B01J 31/28, B01J 37/08, B01J 37/16, C01C 1/04

(54) **CATALYST FOR AMMONIA SYNTHESIS OBTAINED BY COMBINING HYDROGEN-CONTAINING ALUMINUM AND IRON**

(30) Priority: 24.06.2022 JP 2022101842
(71) Applicant: Institute of Science Tokyo, Tokyo 152-8550 (JP)
(72) Inventor: HARA, Michikazu, Tokyo 152-8550 (JP); HATTORI, Masashi, Tokyo 152-8550 (JP)
(74) Representative: J A Kemp LLP
(86) International application number: PCT/JP2023/022847
(87) International publication number: WO 2023/249030

(57) **Abstract**

Provided is a catalyst for ammonia synthesis that includes iron and aluminum hydride as a catalyst for ammonia synthesis and that is easy to handle and exhibits high activity.

## Description

### [Technical field]

The present invention relates to a catalyst for ammonia synthesis, a precursor of the catalyst, and a method for producing ammonia using the same.

### [Background Art]

The Haber-Bosch process, which is a representative method for synthesizing ammonia, synthesizes ammonia through a direct reaction under high-temperature and high-pressure conditions of a mixture of nitrogen and hydrogen using a doubly promoted iron catalyst containing Fe₃O₄ and several mass percent of Al₂O₃ and K₂O. This technology is still used industrially today employing production steps that are almost the same as when the Haber-Bosch process was first completed.

On the other hand, methods for synthesizing ammonia at temperatures lower than the reaction temperature in the Haber-Bosch process are being considered. Catalysts capable of synthesizing ammonia by bringing nitrogen and hydrogen into contact have been studied, and transition metals are being studied as the catalytically active component of such a catalyst. Among these methods, a method using a catalyst for ammonia synthesis in which ruthenium (Ru) as a catalytically active component is supported on various carriers has been proposed as an efficient method (for example, Japanese Patent Laid-Open No. 2006-231229).

It is known that catalysts which use a transition metal such as Ru have extremely high activity, and thus can synthesize ammonia under milder reaction conditions than those used in the Haber-Bosch process. For example, it is known that a reaction proceeds at a low temperature and pressure at a reaction temperature of about 200 to 400°C and an atmospheric pressure of about 1.1 MPa.

Recently, the present inventors succeeded in developing a new catalyst for synthesizing ammonia from nitrogen and hydrogen at a temperature of less than 50°C (Non Patent Literature 1). This catalyst is capable of synthesizing ammonia from nitrogen and hydrogen at room temperature using a composite material, "Ru/CaFH", of "calcium hydride fluoride (CaFH)", which is a substance in which hydrogen and fluorine are bonded to abundant calcium, and ruthenium (Ru) nanoparticles.

### [Citation List]

### [Non Patent Literature]

[Non Patent Literature 1]
Masashi Hattori, Shinya Iijima, Takuya Nakao, Hideo Hosono, Michikazu Hara, Nature Communications, 2020, 11, 2001.

### [Summary of Invention]

### [Technical Problem]

The catalyst described in Non Patent Literature 1 is an excellent catalyst that exhibits high catalytic activity even at low temperatures, but it is difficult to handle because the calcium hydride fluoride contained in the catalyst deactivates in air. An object of the present invention is to provide a catalyst for ammonia synthesis that is easier to handle.

### [Solution to Problem]

As a result of intensive study to solve the above-described problem, the present inventors have discovered that a catalyst obtained by heat-treating a mixture of iron oxide and an aluminum salt, which can be handled in air, in an ammonia synthesis atmosphere exhibits a high catalytic activity, thereby completing the present invention.

That is, the present invention provides the following [1] to [13].
[1] A catalyst for ammonia synthesis, comprising iron and aluminum hydride.
[2] The catalyst for ammonia synthesis according to [1], which has an absorption peak derived from Al-H stretching vibrations around 1730 cm⁻¹ in a measurement by Fourier transform infrared spectroscopy.
[3] The catalyst for ammonia synthesis according to [1], further comprising aluminum nitride.
[4] The catalyst for ammonia synthesis according to [1], which has a molar ratio of aluminum/iron of 1/150 to 1/50.
[5] The catalyst for ammonia synthesis according to [1], wherein the iron has a particle size of 10 to 1000 nm.
[6] The catalyst for ammonia synthesis according to [1], which is obtained by heat-treating a mixture of iron oxide and an aluminum salt in the presence of nitrogen and hydrogen.
[7] The catalyst for ammonia synthesis according to [6], wherein the iron oxide is Fe₂O₃.
[8] The catalyst for ammonia synthesis according to [6], wherein the aluminum salt is aluminum nitrate.
[9] A precursor of a catalyst for ammonia synthesis that exhibits a catalytic activity by heat treatment in the presence of nitrogen and hydrogen, wherein the precursor comprises iron oxide and an aluminum salt.
[10] The precursor of a catalyst for ammonia synthesis according to [9], wherein the iron oxide is Fe₂O₃.
[11] The precursor of a catalyst for ammonia synthesis according to [9], wherein the aluminum salt is aluminum nitrate.
[12] The precursor of a catalyst for ammonia synthesis according to [9], which is obtained by a method comprising the following steps (1) to (4):
   (1) a step of dissolving an iron nitrate and an aluminum salt in water;
   (2) a step of adding an acid containing a fluorine atom to the aqueous solution obtained in step (1);
   (3) a step of evaporating the aqueous solution obtained in step (2) to dryness;
   (4) a step of baking the solid obtained in step (3).
[13] A method for producing ammonia, comprising a step of bringing a raw material gas containing nitrogen and hydrogen into contact with the catalyst for ammonia synthesis according to any one of [1] to [8] or a catalyst for ammonia synthesis formed from the precursor of a catalyst for ammonia synthesis according to any one of [9] to [12].

It is noted that in [6] and [12] above, the "product" such as the "catalyst for ammonia synthesis" and the "precursor of a catalyst for ammonia synthesis" are specified not by their structure or properties, but by their production method. This is because although the "catalyst for ammonia synthesis" and the "precursor of a catalyst for ammonia synthesis" are produced by a heat treatment and the like, the changes in structure and properties caused by such treatment are extremely complex, and to completely identify such changes would require an extremely large amount of money and time.

This specification includes the contents described in the specification and/or drawings of the Japanese patent application, Japanese Patent Application No. 2022-101842, which is the basis of the priority of this application.

### [Advantageous Effect of Invention]

The present invention provides a novel catalyst for ammonia synthesis. The catalyst of the present invention is easy to handle and exhibits high activity.

### [Brief Description of Drawings]

[Figure 1]Figure 1 is a diagram showing an ammonia formation rate of the catalyst of the present invention.
[Figure 2]Figure 2 is a diagram showing the ammonia formation rate of the catalyst of the present invention at various temperatures.
[Figure 3]Figure 3 is a diagram showing the ammonia formation rate of the catalyst of the present invention in a pressurized state.
[Figure 4]Figure 4 is a diagram showing the XRD data of the catalyst of the present invention.
[Figure 5]Figure 5 is a diagram showing data obtained by hydrogen TPD measurement of the catalyst of the present invention.
[Figure 6]Figure 6 is a diagram showing data obtained by FT-IR measurement of the catalyst of the present invention.

### [Description of Embodiments]

Hereinafter, the present invention will be described in detail.

### (A) Catalyst for ammonia synthesis

The catalyst for ammonia synthesis of the present invention is characterized by including iron and aluminum hydride.

The amount of aluminum hydride in the catalyst of the present invention is not particularly limited, but is usually 0.2 to 2.0% by weight, and preferably 0.5 to 1.0% by weight.

The catalyst of the present invention may contain substances other than iron and aluminum hydride. Examples of other substances include aluminum nitride and potassium. Further, the catalyst of the present invention is preferably substantially free of aluminum oxide. Here, "substantially free of aluminum oxide" means that, for example, when XRD measurement of the catalyst of the present invention is carried out, no peak indicating the presence of aluminum oxide is detected in the XRD data.

The molar ratio of iron to aluminum in the catalyst is not particularly limited as long as the catalyst exhibits catalytic activity. The molar ratio (aluminum/iron) is usually 1/500 to 1/2, preferably 1/200 to 1/5, more preferably 1/150 to 1/50, and further preferably 1/100 to 1/20.

The shape of the catalyst of the present invention is not particularly limited, and may be in any shape such as a lump, a powder, or a film.

The particle size of the iron in the catalyst for ammonia synthesis of the present invention is not particularly limited, but from the viewpoint of improving catalyst function, the particle size is preferably 10 to 1000 nm, and more preferably 10 to 500 nm.

Further, the specific surface area of the catalyst of the present invention is not particularly limited, and is usually 10 to 200 m²g⁻¹h⁻¹.

The catalyst of the present invention preferably has an absorption peak derived from Al-H stretching vibrations around 1730 cm⁻¹ in a measurement by Fourier transform infrared spectroscopy. Here, "around 1730 cm⁻¹" means a range that a person skilled in the art could equate with 1730 cm⁻¹ in data obtained in a measurement by Fourier transform infrared spectroscopy. For example, a range of ±10 cm⁻¹, particularly ±5 cm⁻¹ centered on 1730 cm⁻¹, is "around 1730 cm⁻¹."

The catalyst of the present invention can be obtained by heat-treating a mixture of iron oxide and an aluminum salt (precursor of a catalyst) in the presence of nitrogen and hydrogen. The heating conditions are not particularly limited as long as the catalyst of the present invention can be formed from the precursor of a catalyst, but the heating temperature is usually 200 to 600°C, preferably 250 to 500°C, and the heating time is usually 5 to 20 hours, preferably 10 to 20 hours.

### (B) Precursor of catalyst for ammonia synthesis

The precursor of a catalyst for ammonia synthesis of the present invention exhibits catalytic activity by heat treatment in the presence of nitrogen and hydrogen, and is characterized by containing iron oxide and an aluminum salt.

The iron oxide is not particularly limited, and examples include Fe₂O₃ (iron(III) oxide), Fe₃O₄ (iron(II, III) oxide), FeO (iron(II) oxide), FeOOH (iron oxyhydroxide), Fe(OH)₂ (iron(II) hydroxide), Fe(OH)₃ (iron(III) hydroxide), and the like. Among these iron oxides, Fe₂O₃ is preferred. Examples of the Fe₂O₃ include α-Fe₂O₃, β-Fe₂O₃, γ-Fe₂O₃, and ε-Fe₂O₃. Among these examples of Fe₂O₃, α-Fe₂O₃ is preferred from the viewpoint of simplifying preparation.

The aluminum salt is not particularly limited as long as it is a water-soluble salt, and examples include aluminum nitrate, aluminum chloride, aluminum acetate, aluminum formate, and the like. Among these aluminum salts, aluminum nitrate is preferred from the viewpoint of ease of availability.

The molar ratio of the iron oxide to the aluminum salt in the precursor of a catalyst is not particularly limited as long as the precursor of a catalyst exhibits catalytic activity, and the molar ratio of aluminum to iron (aluminum/iron) is usually 1/500 to 1/2, preferably 1/200 to 1/5, more preferably 1/150 to 1/50, and further preferably 1/100 to 1/20.

The shape of the precursor of the catalyst of the present invention is not particularly limited, and the precursor may be in any shape such as a lump, a powder, or a film. Further, the specific surface area of the precursor of the catalyst of the present invention is not particularly limited, and is usually 10 to 200 m²g⁻¹h⁻¹.

The method for producing the precursor of a catalyst of the present invention is not particularly limited. In one embodiment, the precursor of the catalyst of the present invention, in which the iron oxide is Fe₂O₃ and the aluminum salt is aluminum nitrate, can be produced by, for example, a method including the following steps (1) to (4).

In step (1), an iron nitrate and an aluminum salt are dissolved in water. The molar ratio of the iron nitrate to the aluminum salt (aluminum/iron) is not particularly limited, and is usually 1/500 to 1/2, preferably 1/200 to 1/5, more preferably 1/150 to 1/50, and further preferably 1/100 to 1/20.

The aluminum salt is as described above.

In step (2), an acid containing a fluorine atom is added to the aqueous solution obtained in step (1). The acid containing a fluorine atom is added so as to reach a concentration of 1 to 5% (v/v).

Examples of the acid containing a fluorine atom include one or more compounds selected from an inorganic acid, an organic carboxylic acid, an organic sulfonic acid, a carboxylic acid in which one or more hydrogen atoms contained in those organic groups is/are replaced with a fluorine atom, and a sulfonic acid in which one or more hydrogen atoms contained in those organic groups is/are replaced with a fluorine atom. Examples of these compounds include hydrofluoric acid, trifluoroacetic acid, and trifluoromethanesulfonic acid. These compounds may be used alone or in combination of two or more.

In step (3), the aqueous solution obtained in step (2) is evaporated to dryness. The evaporation to dryness can be carried out according to a conventional method, for example, by heating (e.g., to 50 to 90°C) under reduced pressure (e.g., at 5 to 50 kPa).

In step (4), the solid obtained in step (3) is baked. The baking temperature is not particularly limited, but is usually 200 to 600°C, and preferably 250 to 500°C. The baking time is not particularly limited, but is usually 1 to 20 hours, and preferably 5 to 10 hours.

### (C) Method for producing ammonia

The method for producing ammonia of the present invention is characterized by including a step of bringing a raw material gas containing nitrogen and hydrogen into contact with the above-described catalyst for ammonia synthesis of the present invention, or the catalyst for ammonia synthesis formed from the above-described precursor of a catalyst for ammonia synthesis of the present invention.

In the method for producing ammonia of the present invention, usually, ammonia is produced by heating the catalyst when bringing the raw material gas containing nitrogen and hydrogen into contact with the catalyst.

The reaction temperature in the production method of the present invention is not particularly limited, but is usually 100°C or higher, preferably 200°C or higher, and more preferably 300°C or higher, and is usually 600°C or lower, preferably 500°C or lower, and more preferably 400°C or lower. Since ammonia synthesis is an exothermic reaction, a low temperature range is more advantageous for ammonia synthesis in terms of chemical equilibrium theory, but in order to obtain a sufficient ammonia synthesis rate, it is preferred to carry out the reaction in the above temperature range.

In the production method of the present invention, the molar ratio of nitrogen to hydrogen in the raw material gas is not particularly limited, but the molar ratio (hydrogen/nitrogen) is usually 0.4 or more, preferably 0.5 or more, and more preferably 1 or more, and is usually 10 or less, and preferably 5 or less.

The reaction pressure in the production method of the present invention is not particularly limited, but is, in terms of the pressure of the raw material gas containing nitrogen and hydrogen, usually 0.01 MPa or more, and preferably 0.1 MPa or more, and is usually 20 MPa or less, preferably 15 MPa or less, and more preferably, 10 MPa or less. Moreover, from a practical standpoint, it is preferred to carry out the reaction at a pressure condition equal to or more than atmospheric pressure.

In the production method of the present invention, before the nitrogen and hydrogen are brought into contact with the catalyst, it is preferred to remove water and oxides adhering to the catalyst by a method using a dehydrating material, a method of cryogenic separation, hydrogen gas, or the like. A reduction treatment may be mentioned as an example of the removal method.

In the production method of the present invention, in order to obtain a better ammonia yield, it is preferred that the water content in the nitrogen and hydrogen used in the production method of the present invention is small. The total water content in the raw material gas containing nitrogen and hydrogen is not particularly limited, but is usually 100 ppm or less, and preferably 50 ppm or less.

In the production method of the present invention, the type of the reaction vessel is not particularly limited, and any reaction vessel that can usually be used for ammonia synthesis reactions can be used. Examples of the specific type of reaction include a batch reaction, a closed circulation system reaction, a flow system reaction, and the like. Among these, from a practical standpoint, a flow system reaction is preferred. Further, it is possible to employ a method that uses one type of reactor filled with the catalyst or a plurality of connected reactors, or a method that uses a reactor having a plurality of reaction beds in the same reactor.

Since the reaction for synthesizing ammonia from nitrogen and hydrogen is an exothermic reaction accompanied by a decrease in volume, industrially it is preferred to remove the reaction heat in order to increase the ammonia yield, and a known reaction apparatus that has commonly used heat removal means may be used. For example, specifically, a method may be used in which a plurality of reactors filled with the catalyst are connected in series and an intercooler is installed at the outlet of each reactor to remove heat.

In the production method of the present invention, the catalyst for ammonia synthesis of the present invention may be used alone or in combination with other known catalysts that can be commonly used for ammonia synthesis.

### [Examples]

Hereinafter, the present invention will be described in more detail with reference to the following examples, but the present invention is not limited to these examples.

### (Ion chromatogram analysis)

Ammonia gas discharged from the reaction vessel was dissolved in a 5 mM sulfuric acid aqueous solution, and the captured ammonium ions (NH⁴⁺) were analyzed by ion chromatography. The analysis conditions were as follows.

### [Measurement conditions]

| | |
|---|---|
| Equipment: | PU-2080 plus, manufactured by JASCO |
| Detector: | Electric conductivity detector CD-200 (manufactured by Shodex) |
| Column: | Ion chromatogram column LC-2000 plus (manufactured by JASCO) |
| Eluent: | 4.0 mM methanesulfonic acid aqueous solution |
| Flow rate: | 1.0 mL/min |
| Column temperature: | 40°C |

### (Example 1)

### (Preparation of catalyst for ammonia synthesis)

6.0 g of iron(III) nitrate nonahydrate (manufactured by Kanto Chemical, purity 99.9%) and 0.11 g of aluminum nitrate (manufactured by Kanto Chemical, purity 99.9%) were dissolved in 30 mL of pure water, 1.14 mL of trifluoroacetic acid (manufactured by Kanto Chemical, purity 99.0%) was then added to the mixture, and the resultant solution was evaporated to dryness at 70°C under reduced pressure (10 kPa). The obtained solid was baked at 400°C in air for 10 hours to obtain a mixture of iron oxide and aluminum nitrate as a precursor of a catalyst for ammonia synthesis. 0.1420 g of the obtained mixture was sealed in a quartz glass tube, and then heated at 400°C for 2 hours in a mixed gas atmosphere of nitrogen gas (N₂) and hydrogen gas (H₂) to obtain 0.1 g of a catalyst for ammonia synthesis (hereinafter referred to as 50Fe-Al).

### (Constituent components of the catalyst for ammonia synthesis)

The constituent components of the catalyst for ammonia synthesis were analyzed by high-frequency inductively coupled plasma optical emission spectroscopy (ICP optical emission spectroscopy). 0.05 g of the catalyst was dissolved in 10 mL of a mixed solution of 1 M hydrogen chloride aqueous solution and 1 M nitric acid aqueous solution, and the resultant aqueous solution was then analyzed using a high-frequency inductively coupled plasma optical emission spectrometer (Shimadzu Corporation, ICPS-8100). The molar ratio of aluminum/iron in the 50Fe-Al was 1/49.8.

### (Ammonia synthesis reaction)

A reaction for forming ammonia (NH₃) by reacting N₂ and H₂ on a catalyst (hereinafter referred to as ammonia synthesis reaction) was performed. 0.1 g of the catalyst for ammonia synthesis was packed into a glass tube, and the ammonia synthesis reaction was carried out in a fixed bed flow reactor. Each of the raw material gas had a water content of 1 ppm or less. The flow of the raw material gas was conducted by setting the flow rate of the raw material gas to N₂: 15 mL/min, H₂: 45 mL/min, total 60 mL/min, with the pressure of 0.1 MPa, and the reaction temperature of 400°C.

### (Ammonia formation rate)

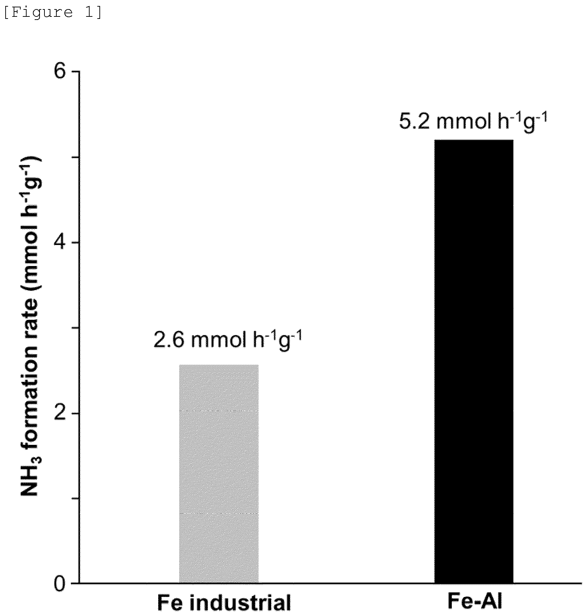

The gas coming out of the fixed bed flow reactor was bubbled into a 0.005 M sulfuric acid aqueous solution to dissolve ammonia in the gas, and the resulting ammonium ions were quantified by ion chromatography using the method described above. The ammonia formation rate at 400°C and 0.1 MPa was 5.0 mmolh⁻¹g⁻¹ after 20 hours and 5.2 mmolh⁻¹g⁻¹ after 50 hours from starting the flow of the raw material gas. For comparison, when the ammonia formation rate of an industrial iron catalyst (iron catalyst containing Al₂O₃: 2%, CaO: 2%, K₂O: 0.5%, "Fe industrial" in the diagrams) instead of 50Fe-Al was measured under the same conditions, the formation rate was 2.6 mmolh⁻¹g⁻¹ (Figure 1). 50Fe-Al exhibited an ammonia formation rate about twice that of the industrial iron catalyst.

### (Ammonia formation rate at various temperatures)

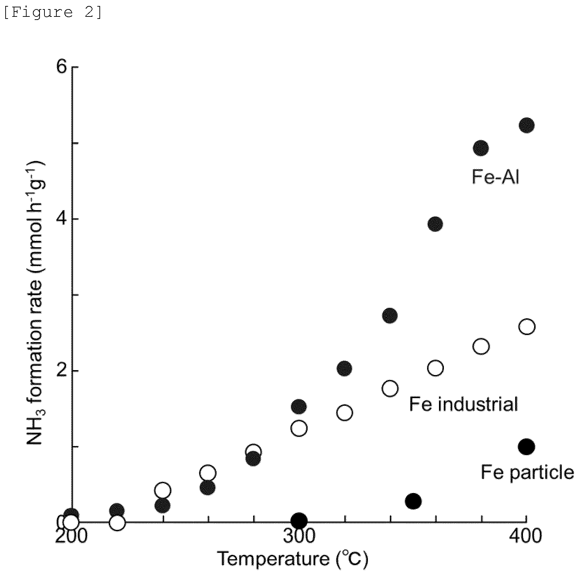

The reaction temperature was adjusted to between 200 and 400°C, and the ammonia formation rate was measured under the same conditions as above (Figure 2). For comparison, instead of 50Fe-Al, the ammonia formation rate using an industrial iron catalyst (iron catalyst containing Al₂O₃: 2%, CaO: 2%, K₂O: 0.5%, "Fe industrial" in the diagrams) or iron particles ("Fe particle" in the diagrams) was also measured under the same conditions (Figure 2). As shown in Figure 2, the 50Fe-Al formed 0.1 mmolh⁻¹g⁻¹ of ammonia even at 200°C, at which conventional industrial iron catalysts do not work. It is noted that the iron particles were prepared in the same manner as the preparation of the 50Fe-Al. That is, 6.0 g of iron(III) nitrate nonahydrate (manufactured by Kanto Chemical, purity 99.9%) was dissolved in 30 mL of pure water, 1.14 mL of trifluoroacetic acid (manufactured by Kanto Chemical, purity 99.0%) was then added to the mixture, and the resultant solution was evaporated to dryness at 70°C under reduced pressure (10 kPa). The obtained solid was baked at 400°C in air for 10 hours to obtain iron oxide particles as a precursor of a catalyst for ammonia synthesis. 0.1420 g of the obtained iron oxide particles was sealed in a quartz glass tube, and then heated at 400°C for 2 hours in a mixed gas atmosphere of nitrogen gas (N₂) and hydrogen gas (H₂) to obtain 0.1 g of a catalyst for ammonia synthesis (Fe-particle).

### (Ammonia synthesis reaction in a pressurized state)

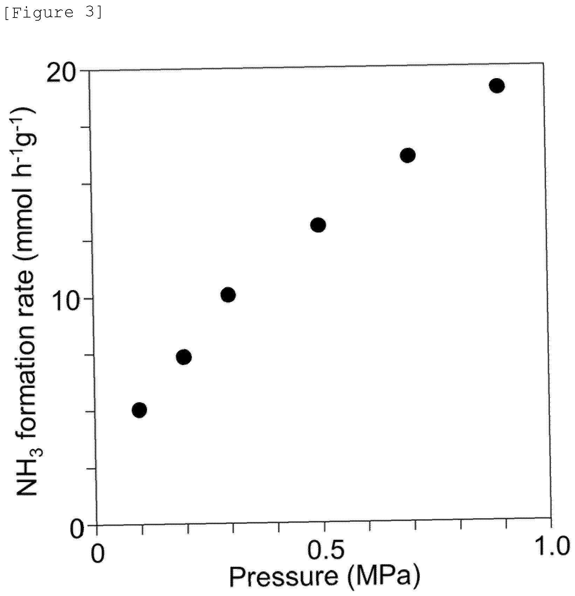

An ammonia synthesis reaction in a pressurized state was performed. 0.1 g of the catalyst for ammonia synthesis was packed into a stainless-steel tube, and the ammonia synthesis reaction was carried out in a fixed bed flow reactor. Each of the raw material gas had a water content of 1 ppm or less. The flow rate of the raw material gas to N₂: 15 mL/min, H₂: 45 mL/min, total 60 mL/min. The flow was conducted by adjusting the pressure to between 0.1 and 0.9 MPa using a back pressure valve installed downstream of the stainless-steel tube, and the reaction temperature was 400°C. The results are shown in Figure 3.

### (Example 2)

### (Preparation of catalyst for ammonia synthesis)

A catalyst for ammonia synthesis (hereinafter referred to as 40Fe-Al) was obtained in the same manner as in Example 1, except that the amount of aluminum nitrate added in Example 1 was changed from 0.11 g to 0.14 g. The molar ratio of aluminum/iron in the 40Fe-Al analyzed by the same ICP optical emission spectroscopy method as in Example 1 was 1/40.3.

### (Ammonia synthesis reaction)

A reaction for forming ammonia (NH₃) (hereinafter referred to as ammonia synthesis reaction) was carried out using the same method and conditions as in Example 1, except that the 40Fe-Al was used instead of the 50Fe-Al in Example 1.

### (Ammonia formation rate)

The ammonia formation rate at 400°C and 0.1 MPa was measured in the same manner as in Example 1. The ammonia formation rate was 5.0 mmolh⁻¹g⁻¹ 50 hours after starting the flow of the raw material gas. The results are shown in Table 1.

**[Table 1]**

| Catalyst | Ammonia formation rate (mmolh⁻¹g⁻¹) |
|---|---|
| 10Fe-Al | 3.7 |
| 20Fe-Al | 4.8 |
| 40Fe-Al | 5.0 |
| 50Fe-Al | 5.2 |
| 80Fe-Al | 5.2 |
| 100Fe-Al | 4.7 |
| 50Fe-Al-K | 5.0 |
| 50Fe-2Al-K | 1.9 |

### (Example 3)

### (Preparation of catalyst for ammonia synthesis)

A catalyst for ammonia synthesis (hereinafter referred to as 20Fe-Al) was obtained in the same manner as in Example 1, except that the amount of aluminum nitrate added in Example 1 was changed from 0.14 g to 0.28 g. The molar ratio of aluminum/iron in the 20Fe-Al analyzed by the same ICP optical emission spectroscopy method as in Example 1 was 1/20.2.

### (Ammonia synthesis reaction)

A reaction for forming ammonia (NH₃) (hereinafter referred to as ammonia synthesis reaction) was carried out using the same method and conditions as in Example 1, except that the 20Fe-Al was used instead of the 50Fe-Al in Example 1.

### (Ammonia formation rate)

The ammonia formation rate at 400°C and 0.1 MPa was measured in the same manner as in Example 1. The ammonia formation rate was 4.8 mmolh⁻¹g⁻¹ 50 hours after starting the flow of the raw material gas. The results are shown in Table 1.

### (Example 4)

### (Preparation of catalyst for ammonia synthesis)

A catalyst for ammonia synthesis (hereinafter referred to as 10Fe-Al) was obtained in the same manner as in Example 1, except that the amount of aluminum nitrate added in Example 1 was changed from 0.11 g to 0.56 g. The molar ratio of aluminum/iron in the 10Fe-Al analyzed by the same ICP optical emission spectroscopy method as in Example 1 was 1/9.9.

### (Ammonia synthesis reaction)

A reaction for forming ammonia (NH₃) (hereinafter referred to as ammonia synthesis reaction) was carried out using the same method and conditions as in Example 1, except that the 10Fe-Al was used instead of the 50Fe-Al in Example 1.

### (Ammonia formation rate)

The ammonia formation rate at 400°C and 0.1 MPa was measured in the same manner as in Example 1. The ammonia formation rate was 3.7 mmolh⁻¹g⁻¹ 50 hours after starting the flow of the raw material gas. The results are shown in Table 1.

### (Example 5)

### (Preparation of catalyst for ammonia synthesis)

A catalyst for ammonia synthesis (hereinafter referred to as 80Fe-Al) was obtained in the same manner as in Example 1, except that the amount of aluminum nitrate added in Example 1 was changed from 0.11 g to 0.07 g. The molar ratio of aluminum/iron in the 80Fe-Al analyzed by the same ICP optical emission spectroscopy method as in Example 1 was 1/80.1.

### (Ammonia synthesis reaction)

A reaction for forming ammonia (NH₃) (hereinafter referred to as ammonia synthesis reaction) was carried out using the same method and conditions as in Example 1, except that the 80Fe-Al was used instead of the 50Fe-Al in Example 1.

### (Ammonia formation rate)

The ammonia formation rate at 400°C and 0.1 MPa was measured in the same manner as in Example 1. The ammonia formation rate was 5.2 mmolh⁻¹g⁻¹ 50 hours after starting the flow of the raw material gas. The results are shown in Table 1.

### (Example 6)

### (Preparation of catalyst for ammonia synthesis)

A catalyst for ammonia synthesis (hereinafter referred to as 100Fe-Al) was obtained in the same manner as in Example 1, except that the amount of aluminum nitrate added in Example 1 was changed from 0.11 g to 0.06 g. The molar ratio of aluminum/iron in the 100Fe-Al analyzed by the same ICP optical emission spectroscopy method as in Example 1 was 1/99.8.

### (Ammonia synthesis reaction)

A reaction for forming ammonia (NH₃) (hereinafter referred to as ammonia synthesis reaction) was carried out using the same method and conditions as in Example 1, except that the 100Fe-Al was used instead of the 50Fe-Al in Example 1.

### (Ammonia formation rate)

The ammonia formation rate at 400°C and 0.1 MPa was measured in the same manner as in Example 1. The ammonia formation rate was 4.7 mmolh⁻¹g⁻¹ 50 hours after starting the flow of the raw material gas. The results are shown in Table 1.

### (Example 7)

### (Preparation of catalyst for ammonia synthesis)

6.0 g of iron(III) nitrate nonahydrate, 0.11 g of aluminum nitrate, and 0.03 g of potassium nitrate (manufactured by Kanto Chemical, purity 98.0%) were dissolved in 30 mL of pure water, 1.14 mL of trifluoroacetic acid (manufactured by Kanto Chemical, purity 99.0%) was then added to the mixture, and the resultant solution was evaporated to dryness at 70°C under reduced pressure (10 kPa). The obtained solid was baked at 450°C in air for 10 hours to obtain a mixture of iron oxide and aluminum nitrate as a precursor of a catalyst for ammonia synthesis. 0.1420 g of the obtained mixture was heated in the same manner as in Example 1 to obtain a catalyst for ammonia synthesis (hereinafter referred to as 50Fe-Al-K). The molar ratio of potassium/aluminum/iron in the 50Fe-Al-K analyzed by the same ICP optical emission spectroscopy method as in Example 1 was 1/1.1/50.1.

### (Ammonia synthesis reaction)

A reaction for forming ammonia (NH₃) (hereinafter referred to as ammonia synthesis reaction) was carried out using the same method and conditions as in Example 1, except that the 50Fe-Al-K was used instead of the 50Fe-Al in Example 1.

### (Ammonia formation rate)

The ammonia formation rate at 400°C and 0.1 MPa was measured in the same manner as in Example 1. The ammonia formation rate was 5.0 mmolh⁻¹g⁻¹ 50 hours after starting the flow of the raw material gas. The results are shown in Table 1. At 400°C and 0.1 MPa, there was no significant performance difference between the 50Fe-Al-K and the 50Fe-Al. The reaction rate of the catalyst at 400°C and 0.9 MPa reached 23.0 mmolh⁻¹g⁻¹. On the other hand, the 50Fe-Al had an ammonia formation rate of 13.2 mmolh⁻¹g⁻¹ at 400°C and 0.9 MPa. From this, it can be seen that when pressurized, the 50Fe-Al-K exhibits a much higher ammonia synthesis activity than that of 50Fe-Al. Further, as described above, the 50Fe-Al had an ammonia synthesis activity of 0.1 mmolh⁻¹g⁻¹ at 200°C and 0.1 MPa, but the 50Fe-Al-K had an ammonia synthesis activity of 0.3 mmolh⁻¹g⁻¹ under the same conditions. This indicates that the 50Fe-Al-K exhibits a better ammonia synthesis activity than that of 50Fe-Al at low temperatures.

### (Example 8)

### (Preparation of catalyst for ammonia synthesis)

A catalyst for ammonia synthesis (hereinafter referred to as 50Fe-2Al-K) was obtained in the same manner as in Example 1, except that the amount of aluminum nitrate added in Example 7 was changed to 0.22 g. The molar ratio of potassium/aluminum/iron in the 50Fe-2Al-K analyzed by the same ICP optical emission spectroscopy method as in Example 1 was 1/1.9/50.1.

### (Ammonia synthesis reaction)

A reaction for forming ammonia (NH₃) (hereinafter referred to as ammonia synthesis reaction) was carried out using the same method and conditions as in Example 1, except that the 50Fe-2Al-K was used instead of the 50Fe-Al in Example 1.

### (Ammonia formation rate)

The ammonia formation rate at 400°C and 0.1 MPa was measured in the same manner as in Example 1. The ammonia formation rate was 4.9 mmolh⁻¹g⁻¹ 50 hours after starting the flow of the raw material gas. The results are shown in Table 1. At 400°C and 0.1 MPa, there was no significant performance difference between the 50Fe-2Al-K and the 50Fe-Al. The reaction rate of the catalyst at 400°C and 0.9 MPa reached 20.0 mmolh⁻¹g⁻¹. On the other hand, the 50Fe-Al had an ammonia formation rate of 13.2 mmolh⁻¹g⁻¹ at 400°C and 0.9 MPa. From this, it can be seen that when pressurized, the 50Fe-Al-K exhibits a much higher ammonia synthesis activity than that of 50Fe-Al. Further, as described above, the 50Fe-Al had an ammonia synthesis activity of 0.1 mmolh⁻¹g⁻¹ at 200°C and 0.1 MPa, but the 50Fe-Al-K had an ammonia synthesis activity of 0.3 mmolh⁻¹g⁻¹ under the same conditions. This indicates that the 50Fe-2Al-K exhibits a better ammonia synthesis activity than that of 50Fe-Al at low temperatures.

### (Example 9)

### (Preparation of catalyst for ammonia synthesis)

A catalyst for ammonia synthesis (hereinafter referred to as 2Fe-Al) was obtained in the same manner as in Example 1, except that the amount of aluminum nitrate added in Example 1 was changed from 0.11 g to 2.75 g.

### (XRD measurement of catalyst after ammonia synthesis reaction)

XRD measurement was carried out on the 2Fe-Al after the ammonia synthesis reaction. The measurement conditions were as follows.
Ammonia synthesis reaction conditions: 400°C, 50 hours
XRD measurement conditions: Equipment (MiniFleX600C, manufactured by Rigaku Corporation), X-rays (Cu·Kα, 45 kV, 15 mA)

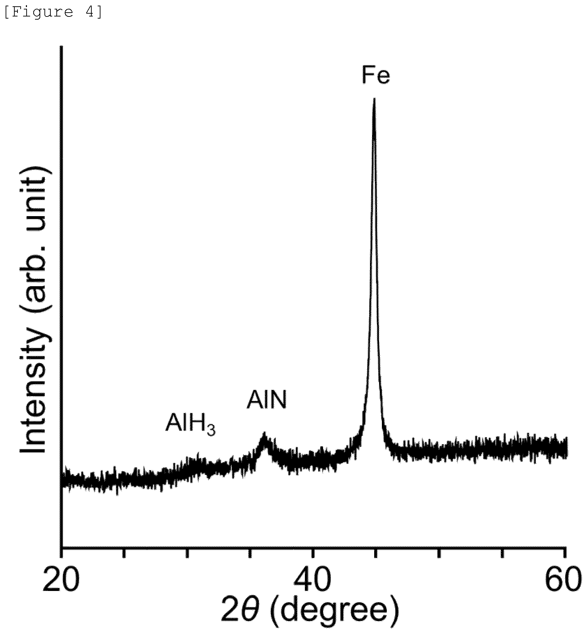

The results are shown in Figure 4. As shown in Figure 4, a large peak indicating the presence of metallic iron was detected near 50 degrees, and peaks indicating the presence of aluminum hydride and aluminum nitride were detected near 30 degrees and 37 degrees, respectively. Many XRD data on iron catalysts for ammonia synthesis have been reported, but all of them are significantly different from the XRD data shown in Figure 3. For example, G. Ertl et al., Nature, 315, 311 (1985) presents XRD data for a standard iron catalyst (containing 2% Al₂O₃, 2% CaO, 0.5% K₂O), but in that XRD data (Fig. 1), the main peak is classified as α-Fe. In P. Chen et al., Angew. Chem. Int., 129, 8842 (2017), the XRD data for the most active iron catalyst (Fe-supported LiH (Fe:Li=1:5)) among the reported iron catalysts is presented, but in that XRD data (Fig. S7) the main peaks are classified as Fe and LiH.

### (Hydrogen TPD measurement of catalyst after ammonia synthesis reaction)

Hydrogen TPD measurement was carried out on the 20Fe-Al after the ammonia synthesis reaction. After the reaction, 0.1 g of the catalyst was packed into a quartz tube, the temperature was increased from 30°C to 500°C at 1°C/min under a flow of 30 mL/min of argon gas, and the H₂ gas produced was measured using a quadrupole mass spectrometer. The measurement conditions were as follows. Ammonia synthesis reaction conditions: 400°C, 50 hours Hydrogen TPD measurement conditions: Equipment (BELCAT, manufactured by Microtrack Bell Co., Ltd.)

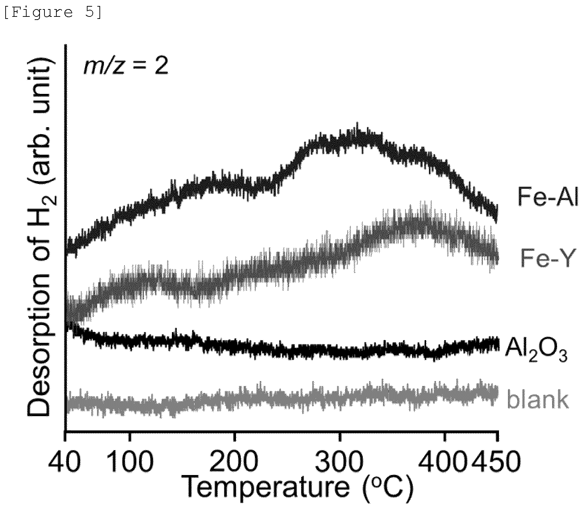

The results are shown in Figure 5. As shown in FIG. 5, desorption of hydrogen was observed with increasing temperature, suggesting the formation of hydrides.

### (Measurement by Fourier transform infrared spectroscopy of catalyst for ammonia synthesis)

The precursor of the 50Fe-Al in Example 1 and the 50Fe-Al-K in Example 7, and the Fe Industrial in Example 1 were heated at 400°C for 2 hours in a hydrogen flow of 30 mL/min, then cooled to room temperature in a hydrogen flow, and measured by Fourier transform infrared spectroscopy (FT-IR measurement). After the measurement of the 50Fe-Al-K, the temperature was further increased to 300°C in a hydrogen flow and FT-IR measurement was performed.
FT-IR measurement conditions: Equipment (FT/IR-6100, manufactured by JASCO)

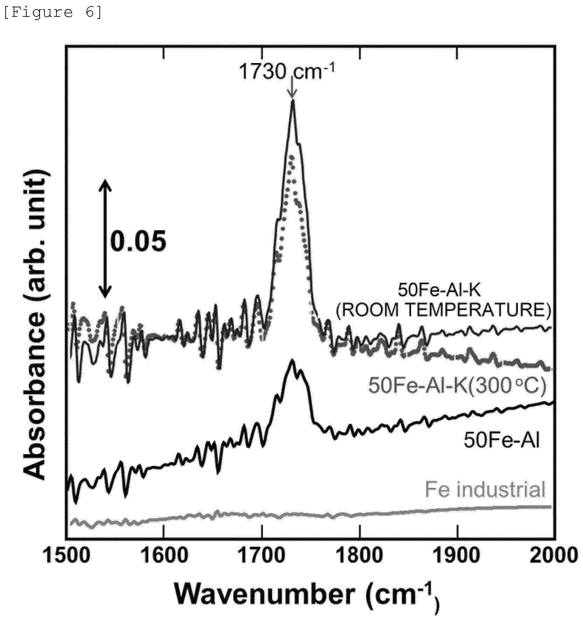

The results are shown in Figure 6. For the 50Fe-Al and the 50Fe-Al-K, an absorption peak attributed to Al-H vibration was confirmed at 1730 cm⁻¹. This absorption peak was also confirmed in the measurement of the 50Fe-Al-K at 300°C. On the other hand, for the Fe Industrial, no absorption peak attributed to Al-H vibration was observed.

This specification includes the contents described in the specification and/or drawings of the Japanese patent application, Japanese Patent Application No. 2022-101842, which is the basis of the priority of this application.

### [Industrial Applicability]

The present invention can be used in various industries related to ammonia.

## Claims

1. A catalyst for ammonia synthesis, comprising iron and aluminum hydride.

2. The catalyst for ammonia synthesis according to claim 1, which has an absorption peak derived from Al-H stretching vibrations around 1730 cm⁻¹ in a measurement by Fourier transform infrared spectroscopy.

3. The catalyst for ammonia synthesis according to claim 1, further comprising aluminum nitride.

4. The catalyst for ammonia synthesis according to claim 1, which has a molar ratio of aluminum/iron of 1/150 to 1/50.

5. The catalyst for ammonia synthesis according to claim 1, wherein the iron has a particle size of 10 to 1000 nm.

6. The catalyst for ammonia synthesis according to claim 1, which is obtained by heat-treating a mixture of iron oxide and an aluminum salt in the presence of nitrogen and hydrogen.

7. The catalyst for ammonia synthesis according to claim 6, wherein the iron oxide is Fe₂O₃.

8. The catalyst for ammonia synthesis according to claim 6, wherein the aluminum salt is aluminum nitrate.

9. A precursor of a catalyst for ammonia synthesis that exhibits a catalytic activity by heat treatment in the presence of nitrogen and hydrogen, wherein the precursor comprises iron oxide and an aluminum salt.

10. The precursor of a catalyst for ammonia synthesis according to claim 9, wherein the iron oxide is Fe₂O₃.

11. The precursor of a catalyst for ammonia synthesis according to claim 9, wherein the aluminum salt is aluminum nitrate.

12. The precursor of a catalyst for ammonia synthesis according to claim 9, which is obtained by a method comprising the following steps (1) to (4):
(1) a step of dissolving an iron nitrate and an aluminum salt in water;
(2) a step of adding an acid containing a fluorine atom to the aqueous solution obtained in step (1);
(3) a step of evaporating the aqueous solution obtained in step (2) to dryness;
(4) a step of baking the solid obtained in step (3).

13. A method for producing ammonia, comprising a step of bringing a raw material gas containing nitrogen and hydrogen into contact with the catalyst for ammonia synthesis according to any one of claims 1 to 8 or a catalyst for ammonia synthesis formed from the precursor of a catalyst for ammonia synthesis according to any one of claims 9 to 12.
